# EUROPEAN PATENT SPECIFICATION

(11) **EP 2 714 985 B1**
(45) Date of publication and mention of the grant of the patent: **28.02.2018**
(21) Application number: 12725363.1
(22) Date of filing: 28.05.2012
(51) Int. Cl.: D06P 1/00, C09B 69/10, C11D 3/40, C11D 3/37

(54) **LIQUID DETERGENT COMPOSITION CONTAINING DYE POLYMER**
FLÜSSIGE WASCHMITTELZUSAMMENSETZUNG MIT EINEM FARBPOLYMER
COMPOSITION DE DÉTERGENT LIQUIDE CONTENANT UN POLYMÈRE DE TEINTURE

(30) Priority: 01.06.2011 EP 11168501
(43) Date of publication of application: 09.04.2014
(73) Proprietor: Unilever PLC, London, Greater London EC4Y 0DY (GB); Unilever N.V., 3013 AL Rotterdam (NL)
(72) Inventor: BATCHELOR, Stephen, Norman, Bebington Wirral Merseyside CH63 3JW (GB); BIRD, Jayne, Michelle, Bebington Wirral Merseyside CH63 3JW (GB)
(74) Representative: McHugh, Paul Edward
(86) International application number: PCT/EP2012/059931
(87) International publication number: WO 2012/163871

(56) References cited:
- EP-B1- 2 032 523
- WO-A1-2008/087497
- WO-A1-2010/102861
- WO-A1-2010/142503
- WO-A1-2010/145887
- WO-A2-2010/149484
- WO-A2-2011/011799

## Description

### Field of Invention

The present invention relates to dye polymers and use in liquid laundry detergent compositions.

### Background of the Invention

WO2010/102861 (Unilever), WO2010/142503 (Unilever), WO2010/145887(Unilever), and WO2010/149484 (Unilever) disclose laundry formulations containing an uncharged, anionic or cationic dyes bound to organic polymers for whitening of fabric.

WO2006/045375 (Unilever), WO2008/087497 (Procter & Gamble) and WO2011/011799 (Procter & Gamble) discloses laundry formulations containing thiophene azo dyes bound to polyalkylene oxides.

### Summary of the Invention

In liquid detergent formulation, neat application of the products to stained fabrics can lead to unwanted blue stains appearing from the fabric substantive dye-polymer in the product.

We have found that unwanted staining of fabrics in a liquid formulation comprising a dye polymer is reduced by lowering the level of small molecules comprising the same chromophore as present in the dye polymer.

In one aspect the present invention provides a liquid laundry detergent composition comprising:
(i) from 2 to 60 wt % of surfactant;
(ii) from 0.001 to 5 wt % of a dye polymer, wherein the dye polymer is obtainable by reacting a blue or violet dye containing an NH2 group with a polymer to form a covalent bond via the reacted NH2 group of the blue or violet dye and the dye polymer having at least 3 repeating same units of alkylene oxide in a chain; and,
(iii) up to 1 wt % of a blue and/or the violet unbound dye, wherein the weight ratio of the dye polymer to unbound blue and/or the unbound violet dye in the liquid laundry detergent is from 10000:1 to 5:1, the unbound blue and/or the violet dye having from 0 to 2 repeating same units of alkylene oxide in a chain and the unbound dye having the same chromophore structure as covalently bound to the dye polymer.

In another aspect the present invention provides domestic method of treating a textile, the method comprising the steps of:
(i) treating a textile with an aqueous solution of the laundry treatment composition, the aqueous solution comprising from 100 ppb to 5000 ppm, of the dye polymer; and, from 0.2 g/L to 3 g/L, of a surfactant; and,
(ii) optionally rinsing and drying the textile.

### DETAILED DESCRIPTION OF THE INVENTION

### The Dye Polymer

The dye polymer is blue or violet in colour. In this regard, a blue or violet colour is provided to the cloth to give a hue angle of 230 to 345, more preferably 265 to 330, most preferably 270 to 300. The cloth used is white bleached non-mercerised woven cotton sheeting.

A dye polymer comprises a blue or violet organic dye covalently bound to a polymer, the dye polymer having at least 3 repeating units covalently bound to each other, wherein each unit contains at least 2 carbon atoms. In the synthesis of dye polymers unbound blue or violet organic dyes is often present in a mixture with the final dye-polymer product. Unbound dye is dye that is not covalently bound to a polymer having at least 3 repeating units. Apart from the linkage to the polymer the dye moiety in the unbound dye and the dye-polymer are identical.

Preferably, the dye polymer has a water solubility in demineralised water at 20 °C of at least 0.1 mg/L, more preferably at least 1 mg/L.

The weight ratio of the dye polymer to the unbound blue or the unbound violet dye in the liquid laundry detergent is from 10000:1 to 5:1.

The dye polymer is not obtained by tethering a reactive dye to a polymer. Reactive dyes are a well known class of dyes.

The chromophore of the blue or violet dye is preferably selected from the group consisting of: azo; anthraquinone; phthalocyanine; triphendioxazine; and, triphenylmethane.

The dye polymers are:

### NH₂ Dye polymers

The dye polymer is obtainable by reacting a dye containing and NH₂ group with a polymer. Preferably the NH₂ is covalently bound to an aromatic ring of the dye. Unbound dye is formed when the dye does not react with polymer.

Preferred dyes containing -NH₂ groups for such reactions are selected from: acid violet 1; acid violet 3; acid violet 6; acid violet 11; acid violet 13; acid violet 14; acid violet 19; acid violet 20; acid violet 36; acid violet 36:1; acid violet 41; acid violet 42; acid violet 43; acid violet 50; acid violet 51; acid violet 63; acid violet 48; acid blue 25; acid blue 40; acid blue 40:1; acid blue 41; acid blue 45; acid blue 47; acid blue 49; acid blue 51; acid blue 53; acid blue 56; acid blue 61; acid blue 61:1; acid blue 62; acid blue 69; acid blue 78; acid blue 81:1; acid blue 92; acid blue 96; acid blue 108; acid blue 111; acid blue 215; acid blue 230; acid blue 277; acid blue 344; acid blue 117; acid blue 124; acid blue 129; acid blue 129:1; acid blue 138; acid blue 145; direct violet 99; direct violet 5; direct violet 72; direct violet 16; direct violet 78; direct violet 77; direct violet 83; food black 2; direct blue 33; direct blue 41; direct blue 22; direct blue 71; direct blue 72; direct blue 74; direct blue 75; direct blue 82; direct blue 96; direct blue 110; direct blue 111; direct blue 120; direct blue 120:1; direct blue 121; direct blue 122; direct blue 123; direct blue 124; direct blue 126; direct blue 127; direct blue 128; direct blue 129; direct blue 130; direct blue 132; direct blue 133; direct blue 135; direct blue 138; direct blue 140; direct blue 145; direct blue 148; direct blue 149; direct blue 159; direct blue 162; direct blue 163; food black 2; food black 1 wherein the acid amide group is replaced by NH₂; Basic Violet 2; Basic Violet 5; Basic Violet 12; Basic Violet 14; Basic Violet 8; Basic Blue 12; Basic Blue 16; Basic Blue 17; Basic Blue 47; Basic Blue 99; disperse blue 1; disperse blue 5; disperse blue 6; disperse blue 9; disperse blue 11; disperse blue 19; disperse blue 20; disperse blue 28; disperse blue 40; disperse blue 56; disperse blue 60; disperse blue 81; disperse blue 83; disperse blue 87; disperse blue 104; disperse blue 118; disperse violet 1; disperse violet 4, disperse violet 8, disperse violet 17, disperse violet 26; disperse violet 28; solvent violet 26; solvent blue 12; solvent blue 13; solvent blue 18; solvent blue 68; and, solvent blue 76.

Further preferred dyes are selected from mono-azo dyes which contain a phenyl group directly attached to the azo group, wherein the phenyl group has an NH₂ groups covalent bound to it. For example a mono-azo thiophene dye:

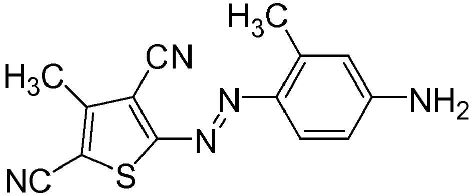

The polymer chain is selected from polyalkylene oxides. The polymer chain may carry anionic, cationic groups. Examples of polyoxyalkylene oxide chains include ethylene oxide, propylene oxide, glycidol oxide, butylene oxide and mixtures thereof.

Unbound dye is dye that has not reacted to form a polymer, for example: 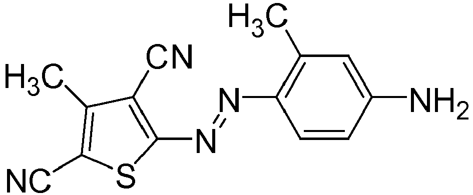 , which has no repeating units.

Another example of unbound dye is: 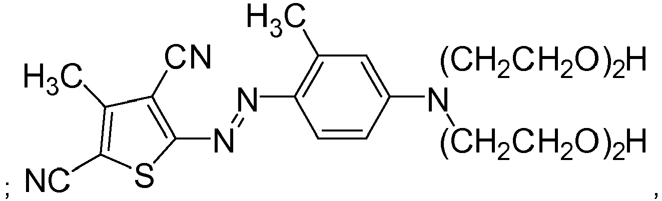 which has two repeating units of -CH₂CH₂O-.

Preferred examples of alkylene oxides are:
-CH₂CH₂O- ; -CH₂CH₂CH₂O- ; -CH₂CH₂CH₂CH₂O- ; and -CH_{z}C(CH₃)HO-. Most preferably -CH₂CH₂O-.

A dye with dye-NH₂ or dye-N(C₂H₅)₂ has no alkylene oxide repeating units.

A dye with Dye-N(C₂H₅)(CH₂CH₂O)ₙH where n=0 has no alkylene oxide repeating units. When n=1, the dye has 1 alkylene oxide unit. When n = 2, the dye has 2 alkylene oxide repeating unit. When n=3 the dye has 3 alkylene oxide repeating unit.

A dye with Dye-N[(CH₂CH₂O)ₙH]₂ where n=0 has no alkylene oxide repeating units. When n=1, the dye has 1 alkylene oxide unit in each chain. When n = 2, the dye has 2 alkylene oxide repeating unit in each chain. When n = 3 the dye has 3 alkylene oxide repeating unit in each chain.

The repeating units of the polymer are contiguous repeating units. As is indicated above the valency of N of the dye-NH₂ may carry one group that has contiguous repeating units or two groups that have contiguous repeating units.

The dye polymer preferably has from 3 to 100 repeating EO units, more preferably from 3 to 10 repeating units EO, and most preferably from 3 to 7 repeating units EO.

Separation of a dye having less than 3 repeating alkylene oxide units from the dye polymer having more than 3 alkylene oxide units may be done by, for example, tituration, preparative chromatography, or HPLC. Alternatively, repeating alkylene oxide units having more than 3 alkylene oxide units may be directly tethered to the reactive dye which negates the need to apply a dye purification step to remove dye polymer with less than 3 repeating alkylene oxide units.

### Surfactant

The composition comprises between 2 to 60 wt % of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆ to C₂₂ alkyl phenol-ethylene oxide condensates, generally 5 to 25 EO, i.e. 5 to 25 units of ethylene oxide per molecule, and the condensation products of aliphatic C₈ to C₁₈ primary or secondary linear or branched alcohols with ethylene oxide, generally 5 to 40 EO.

Suitable anionic detergent compounds which may be used are usually watersoluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher C₈ to C₁₈ alcohols, produced for example from tallow or coconut oil, sodium and potassium alkyl Cg to C₂₀ benzene sulphonates, particularly sodium linear secondary alkyl C₁₀ to C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁ to C₁₅ alkyl benzene sulphonates and sodium C₁₂ to C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆ to C₁₈ primary alcohol sulphate together with a C₁₂ to C₁₅ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

To facilitate ease of use the formulation is preferably packed in pack sizes of 0.5 to 5kg.

### Cationic Compound

When the present invention is used as a fabric conditioner it needs to contain a cationic compound.

Most preferred are quaternary ammonium compounds.

It is advantageous if the quaternary ammonium compound is a quaternary ammonium compound having at least one C₁₂ to C₂₂ alkyl chain.

It is preferred if the quaternary ammonium compound has the following formula: 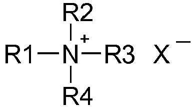 in which R¹ is a C₁₂ to C₂₂ alkyl or alkenyl chain; R², R³ and R⁴ are independently selected from C₁ to C₄ alkyl chains and X⁻ is a compatible anion. A preferred compound of this type is the quaternary ammonium compound cetyl trimethyl quaternary ammonium bromide.

A second class of materials for use with the present invention are the quaternary ammonium of the above structure in which R¹ and R² are independently selected from C₁₂ to C₂₂ alkyl or alkenyl chain; R³ and R⁴ are independently selected from C₁ to C₄ alkyl chains and X⁻ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The softening material is preferably present in an amount of from 2 to 60% by weight of the total composition, more preferably from 2 to 40%, most preferably from 3 to 30% by weight.

The composition optionally comprises a silicone.

### Detergency Builder

One or more detergency builders may be suitably present in the liquid detergent composition of the invention.

Examples of suitable organic detergency builders, when present, include the alkaline metal, ammonium and substituted ammonium polyacetates, carboxylates, polycarboxylates, polyacetyl carboxylates, carboxymethyloxysuccinates, carboxymethyloxymalonates, ethylene diamine-N,N-disuccinic acid salts, polyepoxysuccinates, oxydiacetates, triethylene tetramine hexa-acetic acid salts, N-alkyl imino diacetates or dipropionates, alpha sulpho-fatty acid salts, dipicolinic acid salts, oxidised polysaccharides, polyhydroxysulphonates and mixtures thereof.

Specific examples include sodium, potassium, lithium, ammonium and substituted ammonium salts of ethylenediamino-tetraacetic acid, nitrilo-triacetic acid, oxydisuccinic acid, melitic acid, benzene polycarboxylic acids and citric acid, tartrate mono succinate and tartrate di succinate.

Examples of calcium sequestrant builder materials include alkali metal polyphosphates, such as sodium tripolyphosphate and organic sequestrants, such as ethylene diamine tetra-acetic acid.

### Fluorescent Agent

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

### Perfume

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

### Polymers

The composition may comprise one or more other polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

### Enzymes

One or more enzymes are preferred present in a composition of the invention and when practicing a method of the invention.

Preferably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from B. *subtilis* (Dartois et al. (1993), Biochemica et Biophysica Acta, 1131, 253-360), B. *stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™, Lipoclean™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids.

Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases A₁ and A₂ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluclean™ Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from *C. cinereus,* and variants thereof as those described in WO 93/24618, WO 95/10602, and WO 98/15257. Commercially available peroxidases include Guardzyme™ and Novozym™ 51004 (Novozymes A/S).

### Enzyme Stabilizers

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

The indefinite article "a" or "an" and its corresponding definite article "the" as used herein means at least one, or one or more, unless specified otherwise.

Average molecular weights refer to weight average molecular weights.

### Experimental

### Example 1

A laundry detergent liquid was created containing 9wt% of linear alkyl benzene sulfonate surfactant and 9 wt% of a non-ionic surfactant (C14-C15 alkyl 7-ethoxylate), remainder water and dyes.

Dye, was added to the formulation so that the formulation contained 0.004wt% of the dye. The dye was present as unbound dye or as dye-polymer where the dye is covalently attached to a polyethylene glycol chain.

1ml of the laundry detergent liquid was placed onto white nylon-elastane (80:20) fabric, and left for 30 minutes, to simulate neat contact of the product with fabric. The cloth was then agitated in demineralised water for 30 minutes at a liquor to cloth ratio of 100:1 and dried. The coloured area left by the detergent was measured using a reflectometer and the extent of staining expressed as the ΔE value relative to cloth treated in the same manner but with detergent without any dye present.

The experiment was repeated changing the fraction of unbound dye and covalently attached dye (dye-polymer). The results are shown below.

| % unbound dye | Staining ΔE |
|---|---|
| 0 | 3.3 |
| 10 | 3.2 |
| 25 | 4.9 |
| 50 | 5.9 |

At levels of 25 and 50wt% the unbound dye increases the staining. The structure of the unbound dye is:

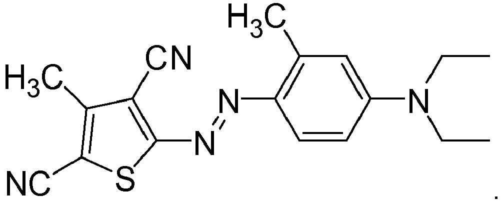

The structure of the bound dye is:

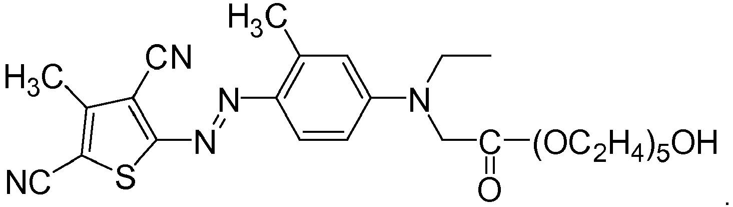

## Claims

1. A liquid laundry detergent composition comprising:
(i) from 2 to 60 wt % of surfactant;
(ii) from 0.001 to 5 wt % of a dye polymer, wherein the dye polymer is obtainable by reacting a blue or violet dye containing an NH2 group with a polymer to form a covalent bond via the reacted NH2 group of the blue or violet dye and the dye polymer having at least 3 repeating same units of alkylene oxide in a chain; and,
(iii) up to 1 wt % of a blue and/or the violet unbound dye, wherein the weight ratio of the dye polymer to unbound blue and/or the unbound violet dye in the liquid laundry detergent is from 10000:1 to 5:1, the unbound blue and/or the violet dye having from 0 to 2 repeating same units of alkylene oxide in a chain and the unbound dye having the same chromophore structure as covalently bound to the dye polymer.

2. A liquid laundry composition according to claim 1, wherein the weight ratio of the dye polymer to the unbound blue or the unbound violet dye in the liquid laundry composition is from 1000:1 to 10:1.

3. A liquid laundry composition according to any preceding claim, wherein the repeating units are ethylene oxide.

4. A liquid laundry composition according to any one of the preceding claims, wherein the chromophore of the blue or violet dye is selected from the group consisting of: azo; anthraquinone; phthalocyanine; triphendioxazine; and, triphenylmethane.

5. A liquid laundry composition according to claim 4, wherein the chromophore is thiophene azo.

6. A domestic method of treating a textile, the method comprising the steps of:
(i) treating a textile with an aqueous solution of the laundry treatment composition as defined in any one of claims 1 to 5, the aqueous solution comprising from 100 ppb to 5000 ppm, of the dye polymer; and from 0.2 g/L to 3 g/L, of a surfactant; and,
(ii) optionally rinsing and drying the textile.

7. A domestic method of treating a textile according to claim 6, wherein the aqueous solution comprises a fluorescer in the range from 0.0001 g/l to 0.1 g/l.

## Patentansprüche

1. Flüssige Waschmittelzusammensetzung, umfassend:
(i) von 2 bis 60 Gew.-% Tensid,
(ii) von 0,001 bis 5 Gew.-% eines Farbstoffpolymers, wobei das Farbstoffpolymer durch Umsetzen eines blauen oder violetten Farbstoffs, der eine NH₂-Gruppe enthält, mit einem Polymer erhältlich ist, um eine kovalente Bindung über die umgesetzte NH₂-Gruppe des blauen oder violetten Farbstoffs zu bilden und wobei das Farbstoffpolymer mindestens 3 sich wiederholende gleiche Einheiten von Alkylenoxid in einer Kette aufweist, und
(iii) bis zu 1 Gew.-% des blauen und/oder violetten ungebundenen Farbstoffs, wobei das Gewichtsverhältnis des Farbstoffpolymers zum ungebundenen blauen und/oder ungebundenen violetten Farbstoff in dem flüssigen Waschmittel von 10000:1 bis 5:1 beträgt, der ungebundene blaue und/oder violette Farbstoff 0 bis 2 sich wiederholende gleiche Einheiten von Alkylenoxid in einer Kette aufweist und der ungebundene Farbstoff die gleiche Chromophor-Struktur aufweist, wie der kovalent an das Farbstoffpolymer gebundene.

2. Flüssige Waschzusammensetzung nach Anspruch 1, wobei das Gewichtsverhältnis des Farbstoffpolymers zu dem ungebundenen blauen oder dem ungebundenen violetten Farbstoff in der flüssigen Waschzusammensetzung von 1000:1 bis 10:1 beträgt.

3. Flüssige Waschzusammensetzung nach einem vorhergehenden Anspruch, wobei die sich wiederholenden Einheiten Ethylenoxid darstellen.

4. Flüssige Waschzusammensetzung nach irgendeinem der vorhergehenden Ansprüche, wobei das Chromophor des blauen oder violetten Farbstoffs aus der Gruppe ausgewählt ist, die aus Azo, Anthrachinon, Phthalocyanin, Triphendioxazin und Triphenylmethan besteht.

5. Flüssige Waschzusammensetzung nach Anspruch 4, wobei das Chromophor Thiophenazo ist.

6. Häusliches Verfahren zum Behandeln eines Textils, wobei das Verfahren die Schritte umfasst:
(i) Behandeln eines Textils mit einer wässrigen Lösung der Waschbehandlungszusammensetzung, wie in irgendeinem der Ansprüche 1 bis 5 definiert, wobei die wässrige Lösung von 100 ppb bis 5000 ppm des Farbstoffpolymers und 0,2 g/l bis 3 g/l eines Tensids umfasst und
(ii) gegebenenfalls Spülen und Trocknen des Textils.

7. Häusliches Verfahren zur Behandlung eines Textils nach Anspruch 6, wobei die wässrige Lösung ein fluoreszierendes Mittel in dem Bereich von 0,0001 g/l bis 0,1 g/l umfasst.

## Revendications

1. Composition de détergent de lessive liquide comprenant :
(i) de 2 à 60 % en masse de tensioactif ;
(ii) de 0,001 à 5 % en masse d'un polymère de colorant, où le polymère de colorant peut être obtenu par réaction d'un colorant bleu ou violet contenant un groupe NH2 avec un polymère pour former une liaison covalente via le groupe NH2 ayant réagi du colorant bleu ou violet et le polymère de colorant ayant au moins 3 unités répétitives identiques d'oxyde d'alkylène dans une chaîne ; et,
(iii) jusqu'à 1 % en masse d'un bleu et/ou du colorant non lié violet, où le rapport massique du polymère de colorant au bleu non lié et/ou au colorant violet non lié dans le détergent de lessive liquide est de 10 000:1 à 5:1, le bleu non lié et/ou le colorant de violet ayant de 0 à 2 unités identiques répétitives d'oxyde d'alkylène dans une chaîne et le colorant non lié ayant la même structure chromophore comme lié par covalence au polymère de colorant.

2. Composition de lessive liquide selon la revendication 1, où le rapport massique du polymère de colorant au bleu non lié ou au colorant violet non lié dans la composition de lessive liquide est de 1 000:1 à 10:1.

3. Composition de lessive liquide selon l'une quelconque des revendications précédentes, où les unités répétitives sont l'oxyde d'éthylène.

4. Composition de lessive liquide selon l'une quelconque des revendications précédentes, où le chromophore du colorant bleu ou violet est choisi dans le groupe constitué de : azo ; anthraquinone ; phtalocyanine ; triphèndioxazine ; et, triphénylméthane.

5. Composition de lessive liquide selon la revendication 4, où le chromophore est le thiophène azo.

6. Procédé domestique de traitement d'un textile, le procédé comprenant les étapes de :
(i) traitement d'un textile avec une solution aqueuse de la composition de traitement de lessive comme définie dans l'une quelconque des revendications 1 à 5, la solution aqueuse comprenant de 100 ppb à 5 000 ppm, du polymère de colorant ; et de 0,2 g/L à 3 g/L, d'un tensioactif ; et,
(ii) éventuellement de rinçage et séchage du textile.

7. Procédé domestique de traitement d'un textile selon la revendication 6, où la solution aqueuse comprend un agent fluorescent dans l'intervalle de 0,0001 g/L à 0,1 g/L.
